Europäisches Patentamt

(19) European Patent Office

Office européen des brevets

(11) Publication number: **0 094 542**
A2

(12) **EUROPEAN PATENT APPLICATION**

(21) Application number: 83104273.4

(22) Date of filing: 02.05.83

(51) Int. Cl.³: **A 23 C 19/05**
**A 23 C 19/068, A 01 J 25/11**

(30) Priority: 13.05.82 IT 2123382

(43) Date of publication of application:
23.11.83 Bulletin 83/47

(84) Designated Contracting States:
CH DE FR GB LI NL SE

(71) Applicant: SORDI S.p.A.
Viale Trento Trieste, 37
I-20075 Lodi (Province of Milano)(IT)

(72) Inventor: Sordi, Mario
Viale Trento Trieste, 35
I-20075 Lodi(Milano)(IT)

(74) Representative: Modiano, Guido et al,
MODIANO, JOSIF, PISANTY & STAUB Modiano &
Associati Via Meravigli, 16
I-20123 Milan(IT)

(54) Method of producing soft cheese of the type of Italian cottage cheese, and system for the implementation thereof.

(57) A method of producing soft cheese of the type of Italian cottage cheese is described which comprises the steps of introducing primary whey into at least one production tank (6) with the addition of a coagulant and steam whereby secondary curd and secondary whey are formed, drawing the secondary whey out of said at least one tank (6) to preheat the oncoming primary whey before it is introduced into said tank (6), discharging from said tank (6) the cottage cheese formed from said secondary curd together with residual secondary whey onto a draining blanket (30) by which the residual secondary whey is drained away, and transferring the cottage cheese to cottage cheese pick-up station.

./...

0094542

"METHOD OF PRODUCING SOFT CHEESE OF THE TYPE OF ITALIAN COTTAGE CHEESE, AND SYSTEM FOR THE IMPLEMENTATION THEREOF"

This invention relates to a method of producing soft or mild cheese of the type of Italian cottage cheese, called "ricotta" and to a system for the implementation thereof.

As is known, for the cottage cheese, it is current practice to use tanks whereinto whey or skimmilk is introduced and heated to a temperature in the 80°C to 85°C range, heat being applied by either direct or indirect steaming, thereafter the final heating step is initiated to float the serum-proteins contained in the whey.

The floating cottage cheese is generally collected manually with special tools which allow the cheese to be removed thereby obtaining a preliminary draining of whey which in practice is left in the production tank wherefrom it is subsequently removed.

As may be seen, the production steps described above are performed manually, which involves a high labor consumption and high costs.

In an attempt at obviating such drawbacks, systems have been proposed for automatically producing cottage cheese on a continuous cycle basis which are based, in essence, on the idea of floating the serum-proteins as the whey is flown through an appropriately heated conduit, but they have not always shown to be capable of fully solving the problem of how to produce cottage cheese having the required organoleptic characteristics.

Another drawback affecting all of the currently employed production systems is that concerning the high expenditure and consumption of steam to pre-heat and heat the whey, with attendant economic burden resulting from a significant waste of energy.

It is a primary object of this invention to remove such prior drawbacks by providing a method of producing soft cheese of the type of cottage cheese, as well as a system for implementing said method, which afford a significant decrease in energy waste , especially as regards the whey heating steps, and moreover, such as to enable substantially all of the production steps to be automated.

Another object of the invention is to provide a system which is so designed as to provide automation of all the production steps, thereby significantly lowering the labor requirements while affording a final product having the same characteristics as those obtainable with conventional manual systems.

It is a further object of this invention to provide a system which can be operated in a simplified manner and manufactured from commercially commonly available elements.

These and other objects, such as will be apparent hereinafter, are achieved by a method of producing soft cheese of the type of cottage cheese, according to the invention, characterized in that it comprises the steps of introducing primary whey into at least one production tank with the addition of a coagulant and a medium e.g. steam at a pre-established temperature, directly or indirectly, whereby secondary curd and secondary whey are formed, conveying the heated secondary whey to a heat exchanging zone to pre-heat the oncoming primary whey prior to its introduction into said tank, discharging the cottage cheese formed from said secondary curd together with residual secondary whey from said tank, onto a draining blanket, and transporting the cottage cheese to a cottage cheese pick-up zone.

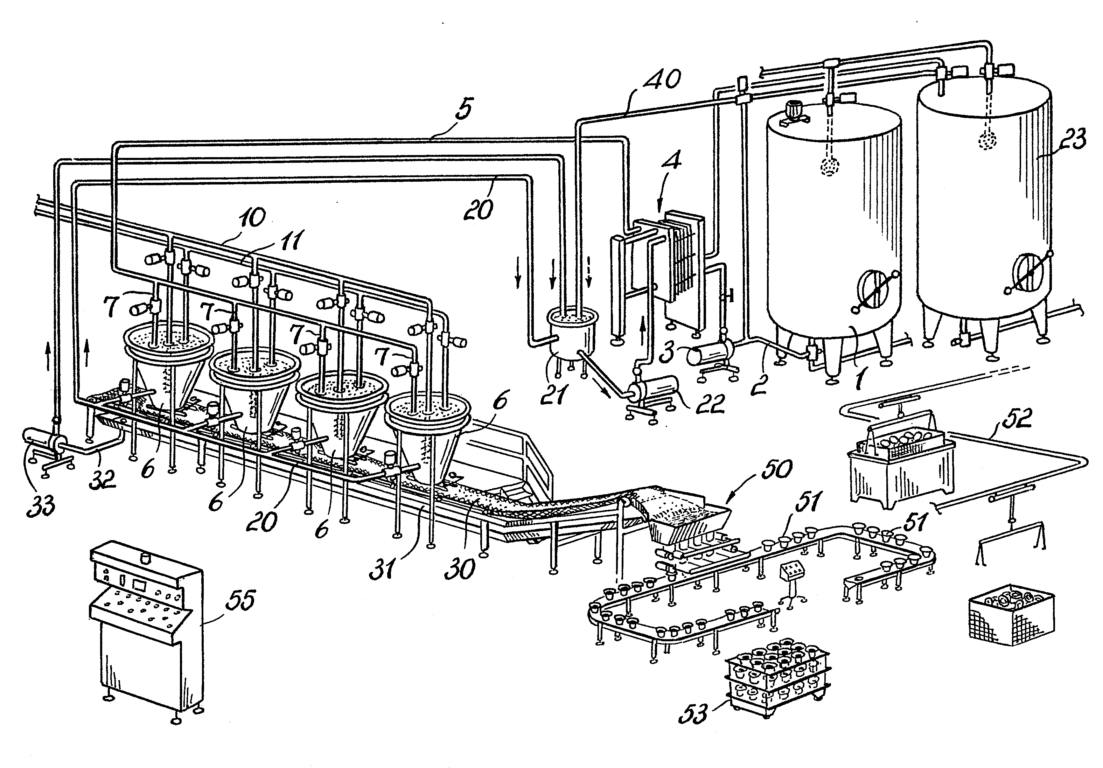

Further features and advantages will be more clearly apparent from the following description of a preferred, though not limitative, embodiment of a system for the production of soft cheese of the type of Italian cottage cheese, as illustrated by way of example and not of limitation in the accompanying drawing, the one figure whereof shows schematically a perspective view of this system.

With reference to the drawing figure, this system for the production of soft cheese of the type of Italian cottage cheese comprises a reservoir 1 for storing primary whey, to the bottom whereof there is connected a primary whey drawing conduit 2 in communication with the suction side of a whey pump 3 which pumps the primary whey through a plate-type heat exchanger 4 and introduces it, through a delivery conduit 5, into a plurality of production tanks 6, which may be of the double-bottom construction type.

Branch lines 7 are provided on the delivery conduit which are controlled by valving means for admission into selected tanks.

The tanks 6 are also provided with a coagulant feed conduit, indicated at 10, and a steam inlet conduit 11 which may provide either direct or indirect heating, as is common practice with such systems. The admission of steam into the individual tanks is regulated by a thermostat control which controls the opening and closing of the intake valves.

From the tanks 6 there extends, at a middle portion of their lateral surface, a secondary whey discharge conduit, indicated at 20, which opens into a gauge tank 21 wherefrom a secondary whey transfer pump 22 draws which introduces the secondary whey into the heat exchanger 4 in counterflow relationship with respect to the primary whey in order to effect a preheating thereof, and hence into a secondary whey collection reservoir, indicated at 23.

The tanks 6 are located above a draining blanket 30 which runs over a collecting frame structure 31 for the purpose of draining the secondary whey from the cheese, which is discharged onto the draining blanket by opening the reservoir bottom.

Immersed in a collection tank, which is part of the frame 31, is a secondary whey recovery conduit 32, the secondary whey being delivered into the gauge tank 21 by pumping means 33.

It should be noted that a flushing conduit 40 is also provided for cleansing the line and the gauge tank 21.

The draining blanket 30 has the function of transporting the cheese, now formed and drained from secondary whey, to a metering unit 50 below which cheese receiving molds or receptacles 51 are automatically transported and positioned.

To fully automate the system operation, also provided is a transport line 52 for the empty molds along with a carriage 53 for removing the molds filled with cheese.

To fully automate the system, there is also provided a keyboard 55 which controls the whole system operation .

The above-described system affords the possibility of implementing a novel Italian cottage cheese production method which consists of introducing primary whey into one or more of the tanks 6, with the addition of a coagulant and steam therein such as to bring the primary whey to a desired temperature, to obtain therein secondary curd and secondary whey.

The secondary whey is drawn from the tanks 6 via the conduit 20, and is introduced into the gauge tank 21 and then into the plate-type heat exchanger 4, where it preheats the primary whey, thus enabling the recovery of considerable amounts of thermal energy which would otherwise be lost.

The secondary whey, upon leaving the heat exchanger, is transferred into a secondary whey collecting reservoir 23.

The primary whey which is introduced into the tanks 6 is heated by steam, and once the cheese production cycle is over, a part of the secondary whey is drawn therefrom preliminarly, as mentioned, thereafter the bottom of the tank 6 is opened so that the cheese formed and residual secondary whey are dropped onto the draining blanket 30, which is advantageously at a relatively short distance from the bottom mouth of the tanks 6, so as to avoid subjecting the cheese to excessively high impacts when dropped.

On the draining blanket 30, the cheese is fully drained from its secondary whey, while being transported to the pick-up zone, whereat a metering device or other packaging equipment may be provided for loading the cheese into the various molds.

It will be appreciated from the foregoing that the invention achieves its objects, and in particular that the method provided affords the possibility of recovering most of the secondary whey heat, thus eliminating thermal losses, and above all allows the cheese to be discharged through the tank bottom, contrary to currently practiced techniques, which resort to skimming of the cheese floating in the tank.

Thus, with this procedure, the system and production cycle can be fully automated, while ensuring a product having high organoleptic characteristics.

The invention as described is susceptible of many modifications and variations without departing from the true scope of the instant inventive concept.

Moreover, all of the details may be replaced with other technically equivalent elements.

In practicing the invention, the materials used, and the dimensions and contingent shapes, may be any

0094542

selected ones to meet individual requirements.

It will be understood that the invention is applicable also to the production of normal cottage cheese, and in such case the term "primary whey" as used throughout the specification and claims will have the meaning of skimmed milk and the term "secondary whey" and "secondary curd" will indicate simply whey and curd.

## CLAIMS

1. A method of producing soft cheese of the type of cottage cheese, characterized in that it comprises the steps of introducing primary whey into at least one production tank with the addition of a coagulant and a medium e.g. steam at a pre-established temperature, directly or indirectly, whereby secondary curd and secondary whey are formed, conveying the heated secondary whey to a heat exchanging zone to pre-heat the oncoming primary whey prior to its introduction into said tank, discharging the cottage cheese formed from said secondary curd together with residual secondary whey from said tank onto a draining blanket, and transporting the cottage cheese to a cottage cheese pick-up zone.

2. A method according to Claim 1, characterized in that the cottage cheese is discharged from said tank by opening the bottom of said tank.

3. A method according to Claim 1, characterized in that said secondary whey drawn out from said tank, as well as the residual secondary whey drained from the cottage cheese, are introduced into a gauge tank located upstream of a heat exchanger.

4. A system for implementing the method according to the preceding claims, characterized in that it comprises a whey collecting reservoir from the bottom portion whereof draws a suction conduit of a whey pump operative to introduce said whey into a plate-type heat exchanger and at least one of a plurality of cottage cheese production tanks (6), said tanks (6) being located above a draining blanket (30) running continuously to transport the cottage cheese to a pick-up zone.

5. A system according to Claim 4, characterized in that it comprises a secondary whey drawing conduit (20) which extends from the lateral surface of each of said tanks (6) and communicates to a secondary whey gauge tank (21) located upstream of said plate-type heat exchanger (4).

6. A system according to one or more of the preceding claims, characterized in that it comprises a secondary whey collecting tank located below said draining blanket (30) and being in communication with said gauge tank (21) through pumping means (33), drawing from said gauge tank (21) there being a secondary whey transfer pump (22) operative to pump the secondary whey through said plate-type heat exchanger (4) for preheating said primary whey, a secondary whey collecting reservoir (23) being also provided.

7. A system according to one or more of the preceding claims, characterized in that said at least one tank (6) has an openable bottom.

8. A method of producing soft cheese of the type of cottage cheese according to the preceding claims and substantially as herein described and illustrated.

9. A system for implementing the method according to the preceding claims and substantially as herein described and illustrated.